# EUROPÄISCHE PATENTSCHRIFT

(11) **EP 2 491 276 B1**
(45) Veröffentlichungstag und Bekanntmachung des Hinweises auf die Patenterteilung: **19.11.2014**
(21) Anmeldenummer: 10770981.8
(22) Anmeldetag: 29.09.2010
(51) Int. Cl.: F15B 1/24, F16H 61/00

(54) **VORRICHTUNG ZUM IMPULSARTIGEN FREIGEBEN EINER IN EINEM SPEICHERGEHÄUSE BEVORRATBAREN FLUIDMENGE**
DEVICE FOR THE PULSED RELEASE OF AN AMOUNT OF FLUID WHICH CAN BE STORED IN AN ACCUMULATOR HOUSING
DISPOSITIF POUR LIBÉRER DE MANIÈRE PULSÉE UN VOLUME DE FLUIDE STOCKÉ DANS UN CARTER D'ACCUMULATEUR

(30) Priorität: 19.10.2009 DE 102009050847; 19.10.2009 DE 102009050848; 19.10.2009 DE 102009050833
(43) Veröffentlichungstag der Anmeldung: 29.08.2012
(73) Patentinhaber: Hydac Technology Gmbh, 66280 Sulzbach / Saar (DE)
(72) Erfinder: LANGE, Norbert, 66113 Saarbrücken (DE); WEBER, Norbert, 66280 Sulzbach/Saar (DE)
(74) Vertreter: Bartels, Martin Erich Arthur
(86) Internationale Anmeldenummer: PCT/EP2010/005923
(87) Internationale Veröffentlichungsnummer: WO 2011/047774

(56) Entgegenhaltungen:
- EP-A1- 0 058 268
- DE-A1-102005 049 177
- DE-A1-102006 014 756

## Beschreibung

Die Erfindung betrifft eine Vorrichtung zum impulsartigen Freigeben einer in einem Speichergehäuse bevorratbaren Fluidmenge, insbesondere zum Realisieren einer Start-Stopp-Funktion bei Automatikgetrieben, mit einem sich gegen einen ersten Energiespeicher abstützenden Kolben, der innerhalb des Speichergehäuses verfahrbar, mit dem Speichergehäuse die aufnehmbare Fluidmenge begrenzt, und der mittels einer Betätigungseinrichtung angesteuert und von einer Arretiereinrichtung freigegeben, die Fluidmenge impulsartig aus dem Speichergehäuse ausschiebt, wobei die Arretiereinrichtung den Kolben in seiner vorgespannten Lage hält und von der Betätigungseinrichtung betätigt, in einer Lösestellung den Kolben freigibt.

In modernen Kraftfahrzeugen wird aus Gründen der Kraftstoffeinsparung und der Minimierung von Schadstoffemissionen in geeigneten Betriebszuständen die Verbrennungskraftmaschine abgeschaltet. Um den Fahrbetrieb trotz solch einer sog. Motor-Start-Stopp-Funktion zu ermöglichen, ist ein kurzer Startvorgang der Verbrennungskraftmaschine und ein sofortiger Kraftschluß in einem Fahrgetriebe des Fahrzeugs erforderlich.

Bei bekannten Automatikgetrieben von Kraftfahrzeugen oder beispielsweise bei automatisierten Schaltgetrieben, welche mit naßlaufenden Lamellenkupplungen ausgeführt sind, werden die Kupplungen über eine Fluidversorgungseinrichtung nur bei laufender Verbrennungskraftmaschine ausreichend mit Hydraulikfluid versorgt. Bei Kraftschlußaufbau in solch einem Getriebe ist zunächst ein Kupplungsspiel zu überwinden und die Kupplung oder Kupplungen durch Anheben des Fluiddrucks vollständig zu schließen. Der Spielausgleich einer Kupplung sowie deren Zuschaltungen in den Kraftfluß wird durch Führen einer Fluidmenge in einen Kolbenraum der hydraulisch aussteuerbaren und zuzuschaltenden Kupplungen erreicht, wobei die Fluidmenge von der Fluidversorgungseinrichtung bereitgestellt wird. Bei einer Wiederanfahrt des Kraftfahrzeugs nach Abschalten der Verbrennungskraftmaschine sind unter Umständen dann eine Mehrzahl von Schaltelementen in einem Getriebe zu öffnen und zu schließen, wodurch ein unzulässig langes Zeitintervall verstreicht, bis ein vollständiger Kraftschluß in dem Getriebe hergestellt ist.

Diesem Nachteil wird bei bekannten Getrieben mit einer elektromotorisch betriebenen Hydraulikpumpe begegnet, deren Fördervolumen von der Drehzahl der Verbrennungskraftmaschine unabhängig ist und die bei fehlender Druckversorgung über die Getriebehauptpumpe im Hydrauliksystem zumindest einen Druck erzeugt, mittels dessen das Kupplungsspiel ausgleichbar ist. Die elektromotorisch antreibbare Hydraulikpumpe führt allerdings zu einer Verschlechterung des Getriebewirkungsgrades und zur Verteuerung des Getriebes. Zudem bedarf sie eines nicht unerheblichen zusätzlichen Bauraumbedarfs im Kraftfahrzeug und eines konstruktiven Aufwands zur Anbindurig an das Hydrauliksystem des Getriebes und an ein elektrisches Steuer- und Regelsystem.

Die DE 10 2006 014 756 A1 zeigt und beschreibt eine Vorrichtung zum Speichern und impulsartigen Freigeben einer Fluidmenge eines Hydraulikfluids für eine Getriebeeinrichtung eines Fahrzeugs, mit einem von einem Speichergehäuse und von einer beweglichen, als Kolben gebildeten Begrenzungseinrichtung begrenzten Speicherraum, der mit der Getriebeeinrichtung zum Austausch der Fluidmenge in Wirkverbindung bringbar ist. Der Kolben ist innerhalb des Speicherraums verfahrbar angeordnet und von einer Betätigungseinrichtung angesteuert. Der Kolben ist ferner von einer Arretiereinrichtung in seiner vorgespannten Position gehalten. Zu diesem Zweck weist die Arretiereinrichtung Rastmittel auf, die den Kolben in seiner gegen einen als Druckfeder gebildeten, ersten Energiespeicher in einer vorgespannten Position halten. Die Arretiereinrichtung kann von der Betätigungseinrichtung in eine Lösestellung für den Kolben gebracht werden, wobei die Fluidmenge hierbei impulsartig in die Getriebeeinrichtung, die insbesondere als ein Automatikgetriebe ausgebildet ist, eingebracht wirt. Die EP 0 058 268 zeigt ebenfalls eine Vorrichtung, die alle Merkmale des Oberbegriffs des Anspruchs 1 offenbart.

Mit solchen Vorrichtungen lassen sich grundsätzlich definiert auf den Bedarf eines bestimmten Verbrauchers angepaßte Fluidmengen zur Darstellung einer praxisgerechten Motor-Start-Stopp-Funktion für Automatikgetriebe bereitstellen. Die bekannten Vorrichtungen bauen zumindest aufwendig auf oder bedürfen eines nicht unbeträchtlichen Bauraumbedarfs.

Die Arretiereinrichtungen und die Betätigungseinrichtungen solcher Vorrichtungen bauen zudem oft unnötig komplex auf, da deren Teilezahl in Bezug auf die Darstellung der notwendigen Funktionen nicht minimiert ist.

Ausgehend von diesem Stand der Technik liegt der Erfindung die Aufgabe zugrunde, eine Vorrichtung zum impulsartigen Freigeben einer in einem Speichergehäuse bevorratbaren Fluidmenge, insbesondere zur Realisierung einer Start-Stopp-Funktion bei Automatikgetrieben zu schaffen, die nicht nur funktionssicher ist und einen geringen Bauraumbedarf aufweist, sondern die einfach herzustellen und besonders robust und verschleißarm ist.

Eine dahingehende Aufgabe wird mit einer Vorrichtung mit den Merkmalen des Patentanspruches 1 in seiner Gesamtheit gelöst.

Die erfindungsgemäße Vorrichtung weist insbesondere eine Arretiereinrichtung und eine Betätigungseinrichtung auf, die ohne mechanische, im Sinne eines Verriegelns oder Entriegelns in Eingriff zu bringende Teile auskommt, nämlich dadurch, dass die Arretiereinrichtung für den Kolben durch eine Kolben-Zylinder-Anordnung mit einem Zylindergehäuse gebildet ist, das von einem Arbeitskolben in eine erste Arbeitskammer und in eine zweite Arbeitskammer unterteilt ist, wobei am Umfang des Arbeitskolbens oder in dem Arbeitskolben selbst ein elektrorheologisches oder magnetorheologisches Ventil in Form eines Durchtrittsspalts oder einer Öffnung zwischen den Arbeitskammern vorgesehen ist. Eine Betätigungseinrichtung ist dergestalt ausgebildet, dass der Spalt oder die Öffnung zwischen den Arbeitskammern mit einem in seiner Feldstärke variierbaren elektrischen oder magnetischen Feld beaufschlagt ist, wodurch der Strömungswiderstand des in den Arbeitskammern befindlichen elektrorheologischen oder magnetorheologischen Fluids bis zu einer Blockade des Spalts oder der Öffnung veränderbar ist.

Die Fluidströmung wird dadurch in dem Spalt oder in der Öffnung an dem Arbeitskolben von dem magnetischen Feld gesteuert. Somit ist eine Vorrichtung geschaffen, die allein durch eine Veränderung des magnetischen Feldes gesteuert ist und nur wenige Teile insgesamt umfaßt.

Die Vorrichtung baut dadurch einfach auf und ist wartungsfrei sowie unempfindlich im Betrieb. Mit der erfindungsgemäßen Vorrichtung sind zudem im Rahmen der gesamten speicherbaren Fluidmenge stufenlos wählbare Volumen an Hydraulikfluid in ein Hydrauliksystem einspeisbar, in dem interaktiv der Strömungswiderstand in dem Spalt oder der Öffnung verändert wird.

Bei einem besonders bevorzugten Ausführungsbeispiel der Vorrichtung ist der Arbeitskolben der Arretiereinrichtung fest mit dem Speichergehäuse verbunden, wobei das Zylindergehäuse für den Arbeitskolben durch einen rückwärtigen, von dem Kolbenboden abragenden Schaft gebildet ist. Der Schaft ragt zentral axial von dem Kolben ab. Bei einem Ausführungsbeispiel der Erfindung sind die beiden Arbeitskammern radial zwischen dem Schaft des Kolbens und dem Speichergehäuse angeordnet.

Bei einem anderen Ausführungsbeispiel kann die erste und die zweite Arbeitskammer auch radial zwischen dem Schaft und dem Arbeitskolben angeordnet sein, wobei der Arbeitskolben in der Art eines Zylinders mit einer radial am Umfang angeordneten Wulst oder mit einem Ring ausgebildet ist.

Eine elektromagnetische Spule zum Erzeugen eines elektromagnetischen Feldes kann in dem Arbeitskolben angeordnet sein oder an einem gehäusefesten Träger, der in den Schaft des Kolbens ragt, festgelegt sein. Auf diese Weise läßt sich der Bauraumbedarf der Vorrichtung in vorteilhafter Weise minimieren. Ist der Bauraumbedarf der Vorrichtung jedoch nicht eine wesentliche bestimmende Größe, so kann es zweckmäßig sein, die Spule auf der Außenseite des Speichergehäuses oder mit radialem Abstand an der Außenseite des Schafts des Kolbens anzuordnen.

In einer einfach zu fertigenden Variante der Vorrichtung ist der Schaft des Kolbens hohlzylindrisch ausgebildet und das Speichergehäuse wenigstens in dem Verfahrbereich des Kolbens als Zylinder ausgeführt, indem der Kolben mit dem Schaft zwischen einer ersten Endstellung und einer zweiten Endstellung längsverschiebbar angeordnet ist. Der Schaft ist bevorzugt mit dem Kolben einstückig ausgebildet und in seiner Lage derart gewählt, dass er in einer, ein Maximum des Volumens der aufnehmbaren Fluidmenge definierenden Stellung in axialem Anschlag mit einem endseitigen Deckel des Speichergehäuses ist. Es ist zweckmäßig, den Ausschub der gespeicherten Fluidmenge in dem Speichergehäuse durch eine Federeinrichtung zu bewirken. Die Federeinrichtung kann prinzipiell eine Zug- oder Druckfeder sein oder Arbeitsgas in einem Speicherraum. Andere Bauarten von Federeinrichtungen als Energiespeicher, wie Tellerfedern od. dgl., sind zudem einsetzbar.

Die aufnehmbare Fluidmenge in dem Speichergehäuse entspricht zumindest einem Befüllvolumen eines hydraulischen Verbrauchers, wie einem Schaltzylinder an einem Automatikgetriebe eines Personenkraftwagens. Die Vorrichtung läßt sich als eigenständige Baueinheit an einem Fahrgetriebe oder in einem hydraulischen Steuergerät des Fahrgetriebes anordnen. Die Betätigungsvorrichtung mit dem elektro- oder magnetorheologischen Ventil wird beispielsweise nach einem Motorstopp bei einer Anforderung zum Starten der Verbrennungskraftmaschine des Kraftfahrzeuges deaktiviert, d.h. die elektrotheologische Flüssigkeit oder die magnetorheologische Flüssigkeit in den beiden Arbeitskammern wird keinem magnetischen Feld ausgesetzt, wodurch die Flüssigkeit des Arbeitskolbens beispielsweise unter der Einwirkung der Druckkraft des ersten Energiespeichers auf den Kolben den Spalt oder die Öffnung zwischen den Arbeitskammern und dem Zylinder rasch überwinden kann. Das impulsartige Freigeben der Fluidmenge aus dem Speicherraum des Speichergehäuses kann auch anstatt bei einer Anforderung zum Start der Verbrennungskraftmaschine durch ein Lösen der Betriebsbremse des Kraftfahrzeuges vorgenommen werden.

Nachstehend ist die Erfindung anhand von der in der Zeichnung dargestellten Ausführungsbeispielen näher erläutert. Es zeigen:
- Fig.1: einen Längsschnitt durch eine erfindungsgemäße Vorrichtung im befüllten Zustand;
- Fig.2: einen Längsschnitt durch die Vorrichtung nach der Fig.1 im entleerten Zustand;
- Fig.3: einen schematischen Längsschnitt durch eine Vorrichtung mit einer elektrorheologisch wirkenden Arretiereinrichtung mit Permanentmagnet;
- Fig.4: einen schematischen Längsschnitt durch eine Vorrichtung und eine in einem Kolbenschaft angeordneten elektromagnetischen Spule;
- Fig.5: einen schematischen Längsschnitt durch eine weitere Vorrichtung einer weiteren magnetorheologischen Arretiereinrichtung und einer elektromagnetischen Spule auf der Außenseite des Gehäuses der Vorrichtung angeordnet; und
- Fig. 6 bis 8: jeweils einen schematischen Längsschnitt durch weitere Ausführungsbeispiele der erfindungsgemäßen Vorrichtungslösung.

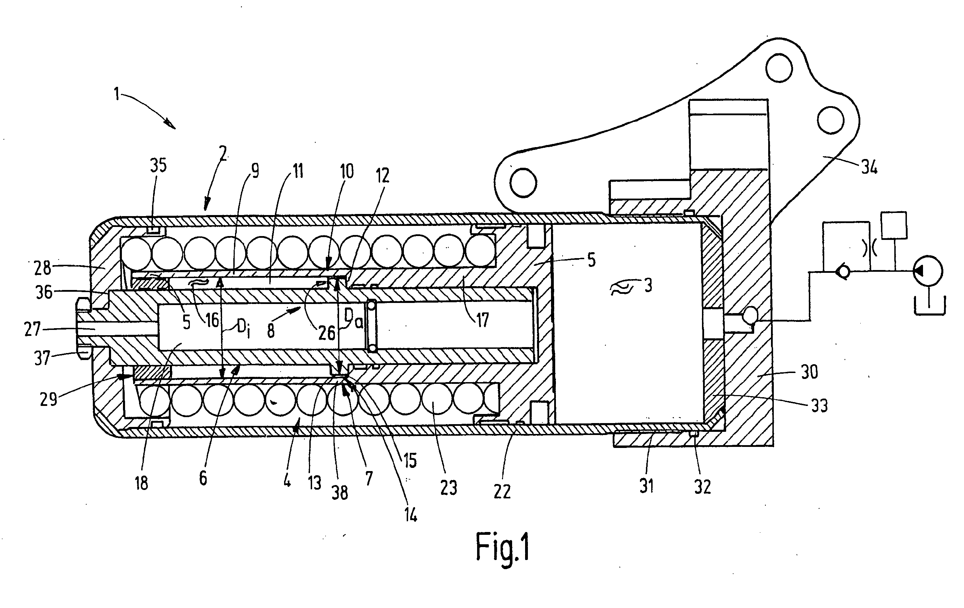

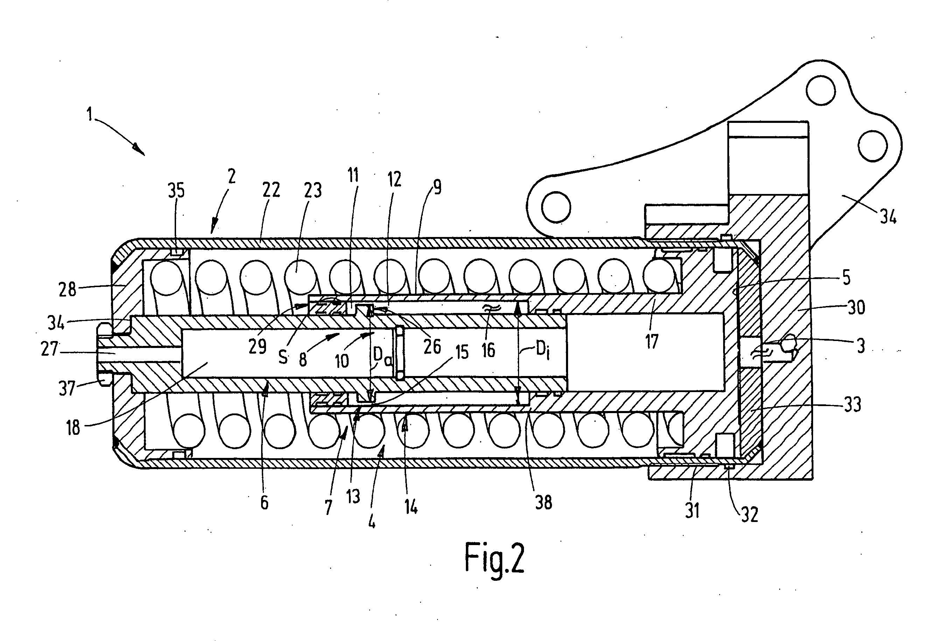

In der Fig.1 ist in einem Längsschnitt eine Vorrichtung 1 zum impulsartigen Freigeben einer in einem Speichergehäuse 2 bevorratbaren Fluidmenge 3 gezeigt. Die Vorrichtung 1 dient zur Speicherung eines Arbeitsfluids für einen Verbraucher einer hydraulischen Anlage (nicht dargestellt), wie beispielsweise zur Speicherung und impulsartigen Abgabe von Hydrauliköl für einen Schaltzylinder eines Automatikgetriebes eines Personenkraftwagens. Das zylindrische Speichergehäuse 2 weist einen ersten Energiespeicher 4 auf, der als zylindrische Druckfeder ausgebildet ist. Der Energiespeicher 4 dient der Beaufschlagung eines Kolbens 5 mit einer Druckkraft, die ausreichend ist, um den Kolben 5 aus seiner vorgespannten Position, wie in der Fig.1 gezeigt, in eine Position, in der die Fluidmenge 3 aus dem Speichergehäuse 2 ausgestoßen ist, zu verfahren (vgl. Fig.2). Die Fluidmenge 3 ist in der in Fig.1 gezeigten Position des Kolbens 5 durch eine an sich bekannte Fluidfördereinrichtung, wie etwa eine Rotationspumpe, in das Speichergehäuse 2 unter Druck eingebracht. Der Kolben 5 wird nach dem Befüllvorgang durch eine Arretiereinrichtung 7 in der gezeigten, vorgespannten Position gehalten.

Die Arretiereinrichtung 7 ist aus einer Kolben-Zylinder-Anordnung 8 gebildet. Zu der Kolben-Zylinder-Anordnung 8 gehört ein in dem in Fig.1 gezeigten Ausführungsbeispiel ein fest mit dem Speichergehäuse 2 verbundener Arbeitskolben 10. Der Arbeitskolben 10 ist als im wesentlichen zylindrische Hülse mit einer an ihrem Umfang 13 ringförmigen Erhebung 26 angeordnet, etwa in halber, axialer Länge, ausgebildet. Über dem Arbeitskolben 10 ist ein Zylindergehäuse 9 angeordnet, das durch einen Schaft 17 an dem Kolben 5 gebildet wird. Der Arbeitskolben 10 hat einen Außendurchmesser Da, der dem des Innendurchmessers Di des Schafts 17 in einem Stopfbuchsenbereich S entspricht, zuzüglich einem Toleranzmaß. Die ringförmige Erweiterung 26 ist, einen Spalt 15 bildend, zu dem Zylindergehäuse 9 beabstandet und bildet eine gewisse Trennung zwischen einer ersten Arbeitskammer 11 und einer Art zweiten Arbeitskammer 12 zwischen dem Arbeitskolben 10 und dem Zylindergehäuse 9 aus. Der Spalt 15 ist als Ringspalt ausgebildet. Die Erweiterung 26 bildet mit dem Spalt 15 ein Ventil 14 für ein in den beiden Arbeitskammern 11,12 eingefülltes elektrorheologisches Fluid 16. Im Inneren des Arbeitskolbens 10 ist von einem, dem Kolben 5 abgewandten Ende eine bis über die Erweiterung 26 hinausragende elektromagnetische Spule 18 angeordnet, deren Spannungszufuhr durch eine axiale Öffnung 27 in einem, das Speichergehäuse 2 endseitig verschließenden Deckel 28 erfolgt.

In Abhängigkeit von der Bestromung der Spule 18 und des elektromagnetischen Felds ändert sich die Viskosität des elektrorheologischen Fluids, so dass, wie in Fig.1 gezeigt, der Spalt 15 von der mit Fluid 16 gefüllten, ersten Arbeitskammer 11 nicht in Richtung der zweiten Arbeitskammer 12 überströmt werden kann. Die erste Arbeitskammer 11, die sich axial von einer, den Stopfbuchsenbereich S bildenden Dichteinrichtung 29 bis zu der Erweiterung 26 an dem Arbeitskolben 10 erstreckt, bleibt vollständig mit dem elektrorheologischen Fluid 16 gefüllt, wobei Zugkräfte von der Dichteinrichtung 29 über den Schaft 17 zu dem Kolben 5 übertragen werden, die den Kolben 5 in seiner Lage halten.

Die Arretiereinrichtung ist auf diese Weise durch die Kolben-Zylinder-Anordnung und die elektrorheologische Flüssigkeit gebildet. Die Spule 18 bildet zusammen mit einer diese ansteuernden und mit elektrischer Spannung versorgenden Steuereinheit die Betätigungseinrichtung 6 aus.

In Fig.2 ist die Vorrichtung 1 in einem bestromten Zustand der Spule 18 gezeigt, wobei das elektrorheologische Fluid 16 von der ersten Arbeitskammer 11 zu der zweiten Arbeitskammer 12 geströmt ist und dabei das elektrorheologische Ventil 14 überströmt hat. Der Kolben 5 ist dadurch von dem ersten Energiespeicher 4 beaufschlagt in eine Position verfahren, die einem Minimum der Fluidmenge 3 in dem Speichergehäuse 2 entspricht und die Fluidmenge 3 ist an einen Verbraucher eines Automatikgetriebes abgegeben.

Die Fluidmenge 3 ist dabei durch einen Deckel 30 nach außen hin abgeschlossen, der in seiner grundsätzlichen Ausgestaltung topfförmig ausgebildet ist, und mit dem als Stahlzylinder gebildeten Speichergehäuse 2 über ein endseitig an dem Speichergehäuse 2 vorgesehenes Feingewinde 31 verschraubt sowie über ein dazwischengelegtes Dichtelement 32 entsprechend abgedichtet. Als weiteres Element des Speichergehäuses 2 ist ein scheibenartiger Deckel 33 mit einem endseitigen Wandabschnitt des Speichergehäuses 2 verbördelt. Auf dem umbördelten Deckel 33, der eine geringfügig größere Durchtrittsöffnung für die Fluidmenge 3 aufweist als der Deckel 30, liegt der Deckel 30 auf. Eine Flanschplatte 34 zum Anbringen der Vorrichtung 1 an einem Automatikgetriebe erstreckt sich über eine axiale Teillänge des Speichergehäuses 2 von dem Deckel 30 wegführend.

Der dem Deckel 30 gegenüberliegende Deckel 28 an dem Speichergehäuse 2 ist in gleicher Weise wie der scheibenartige Deckel 30 mit einem endseitigen Wandabschnitt des Speichergehäuses 2 verbördelt, wobei ein Dichtelement 35 dazwischengelegt ist. Der Deckel 28 weist eine Aufnahme 36 auf in der Art einer Stufenbohrung mit zu dem Gehäuseinneren hin sich vergrößerndem Durchmesser, worin der Arbeitskolben 10 zentriert ist. Der Arbeitskolben 10 ragt von innen nach außen durch die Aufnahme 36 hindurch und ist mit einem Gewindeabschnitt und einer darauf festgelegten Mutter 37 an dem Deckel 28 verschraubt. Der Arbeitskolben 10 bildet mit seinem, dem Kolben 5 zugewandten Ende einen Axialanschlag für den Kolben 5 (vgl. Fig.1) aus.

Der Schaft 17 des Kolbens 5 weist von dem Kolben 5 ausgehend etwa in seiner halben Länge einen Sprung seiner Wandstärke auf, die ab etwa seiner halben Länge auf weniger als die Hälfte im Vergleich zu der Wandstärke seines von dem Kolben 5 ausgehenden Abschnitts beträgt. Durch diese konstruktive Maßnahme ist der Kolben 5, der Schaft 17 und das Zylindergehäuse 9 der Kolben-Zylinder-Anordnung 8 einstückig ausgebildet und montierbar mit den übrigen Komponenten der Vorrichtung 1. Dadurchläßt sich insbesondere das elektrorheologische Ventil 14 mit engen Toleranzen fertigen. Der Kolben 5 ist in an sich bekannter Weise mit in Umfangsnuten eingelegten Dicht- oder Kolbenringen abgedichtet.

Sofern für die nachfolgend beschriebenen Ausführungsbeispiele dieselben Bezugszeichen wie für das vorstehend beschriebene Ausführungsbeispiel nach den Fig.1 und 2 eingesetzt sind, gelten die bisherigen Ausführungen auch für die insoweit nachfolgend erläuterten Bauteile der weiteren Ausführungsbeispiele.

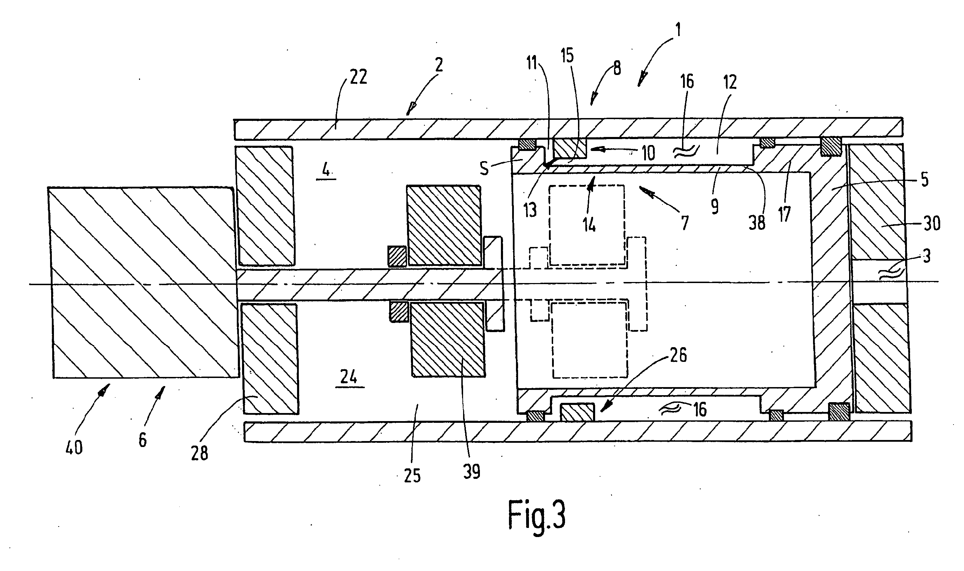

In Fig.3 ist in einer schematischen Darstellung ein weiteres Ausführungsbeispiel der Vorrichtung 1 zum impulsartigen Freigeben einer Fluidmenge 3 gezeigt, wobei das Speichergehäuse 2 als Zylinder 22 dargestellt ist. Die Arretiereinrichtung 7 ist aus einer den gehäusefesten Arbeitskolben 10 bildenden, ringförmigen Erweiterung 26 der Wand des Zylinders 22 gebildet, wobei die im Querschnitt gesehen rechteckförmige Erweiterung 26 bei etwa der Hälfte der Länge des Speichergehäuses 2 angeordnet ist.

Der Kolben 5 ist in seiner, ein Minimum des Volumens der Fluidmenge 3 in dem Speichergehäuse 2 einnehmenden Stellung gezeigt. Der Kolben 5 ist einstückig mit dem als Zylindergehäuse 9 der Arretiereinrichtung 7 teilweise darstellenden Schaft 17 gebildet. An dem Kolben 5 anschließend ist der Schaft 17 in seinem Durchmesser reduziert gegenüber dem Durchmesser des Kolbens 5 gebildet. Der Schaft 17 weist an seinem, dem Kolben 5 abgewandten freien Ende eine ringförmige Erweiterung 38 mit etwa demselben Durchmesser auf wie der Durchmesser des Kolbens 5. Axial zwischen dieser Erweiterung 38 und dem Kolben 5 spannt sich von der Erweiterung 26 des Zylinders 22 weitgehend getrennt die erste und die zweite Arbeitskammer 11,12 auf.

Die Erweiterung 26 bildet zu dem Schaft 17 des Kolbens 5 einen Ringspalt 15 aus, der wiederum das elektrorheologische Ventil 14 für elektrorheologisches Fluid 16 in den beiden Arbeitskammern 11,12 bildet. Der Kolben 5 und die Erweiterung 38 an dem Schaft 17 sind mit in Nuten eingelegten Dichtelementen gegenüber der Innenwand des Zylinders 22 abgedichtet.

An einem stößelartigen, in dem Schaft 17 axial verschiebbaren Träger 19 sind Permanentmagnete 39 festgelegt, die in dem Bereich des elektrorheologischen Ventils 14 axial verschiebbar angeordnet sind. Zu diesem Zweck ist der Träger 19 mit einem Anker eines Magnetsystems 40 wirkverbunden. Unter der Wirkung des Magnetfeldes der Permanentmagnete 39 ist das Ventil 14 sperrend und der Kolben 5 verharrt in seiner jeweiligen eingenommenen Position. Der in Fig.3 gezeigte Kolben 5 ist durch ein Arbeitsgas 25 in einem schaftseitigen Arbeitsraum 24 in die gezeigte Position gedrückt und kann beim Verfahren des Permanentmagneten 39 in die durchgezogen gezeichnete Position vorgespannt werden, indem Hydraulikfluid durch die Öffnung 27 gepreßt wird. Anschließend können die Permanentmagnete 39 wieder in den Bereich des Ventils 14 gefahren werden. Der Kolben 5 kann seine eingenommene, vorgespannte Position halten. Das elektrorheologische Fluid 16 kann dabei nicht mehr von einer Arbeitskammer zu der anderen Arbeitskammer strömen.

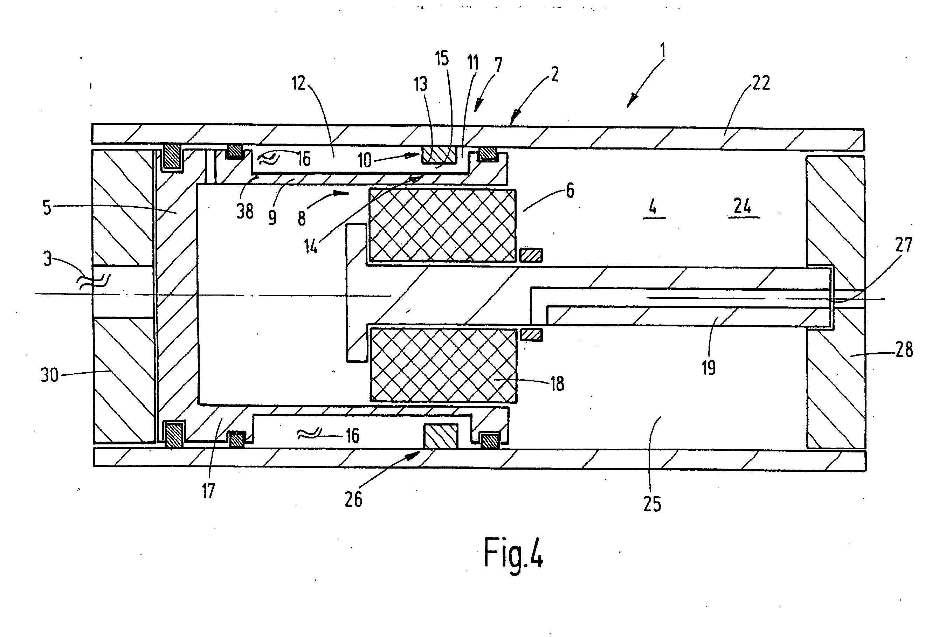

In der Fig.4 ist in einem schematischen Längsschnitt ein weiteres Ausführungsbeispiel einer Vorrichtung 1 zum impulsartigen Freigeben einer in dem Speichergehäuse 2 bevorrateten Fluidmenge 3 gezeigt, wobei das Speichergehäuse 2, der Kolben 5 mit Schaft 17, sowie der Arbeitskolben 10 und diesem zugeordnete erste und zweite Arbeitskammern 11,12 identisch, wie in der Fig.3 gezeigt, aufgebaut sind. Der Träger 19 ist im Gegensatz zu dem in der Fig.3 gezeigten Ausführungsbeispiel gehäusefest ausgestaltet und dient der fixen Positionierung einer elektromagnetischen Spule 18 und zur temporären Bereitstellung eines magnetischen Feldes an dem Ventil 14. Der Träger 19 weist ferner eine Möglichkeit zur Kabeldurchführung für die elektromagnetische Spule 18 auf und zum Einbringen von Arbeitsgas 25 in den, der bevorratbaren Fluidmenge 3 rückwärtigen Raum, der von dem Kolben 5 begrenzt ist.

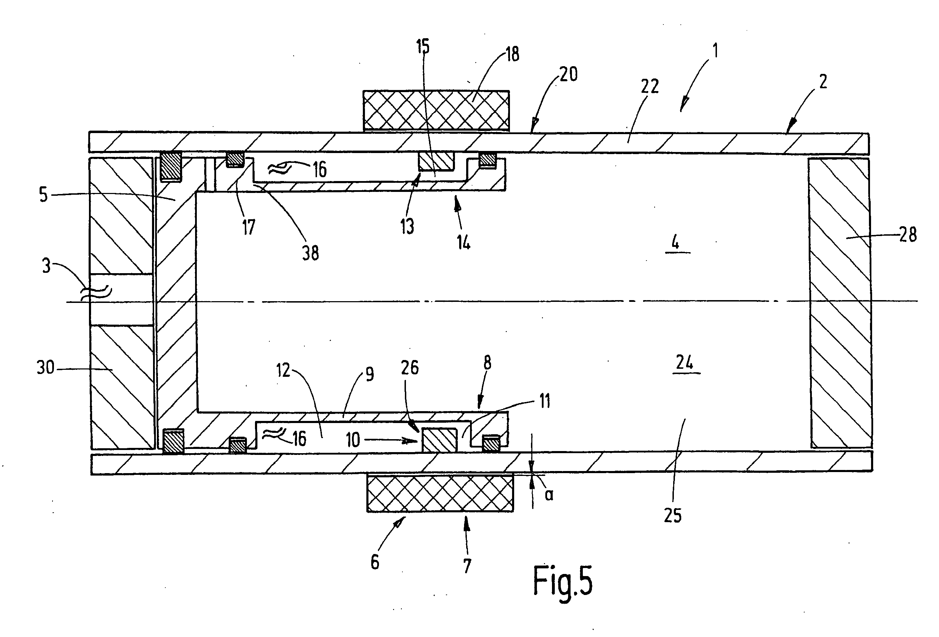

Die Vorrichtung 1, welche in einem schematischen Längsschnitt in Fig.5 gezeigt ist, unterscheidet sich durch die elektromagnetische Spule 18, die auf der Außenseite 20 des Zylinders 22, der das Speichergehäuse 2 im wesentlichen bildet, angeordnet ist. Es ergibt sich dadurch eine vereinfachte Montage und Wartungsmöglichkeit.

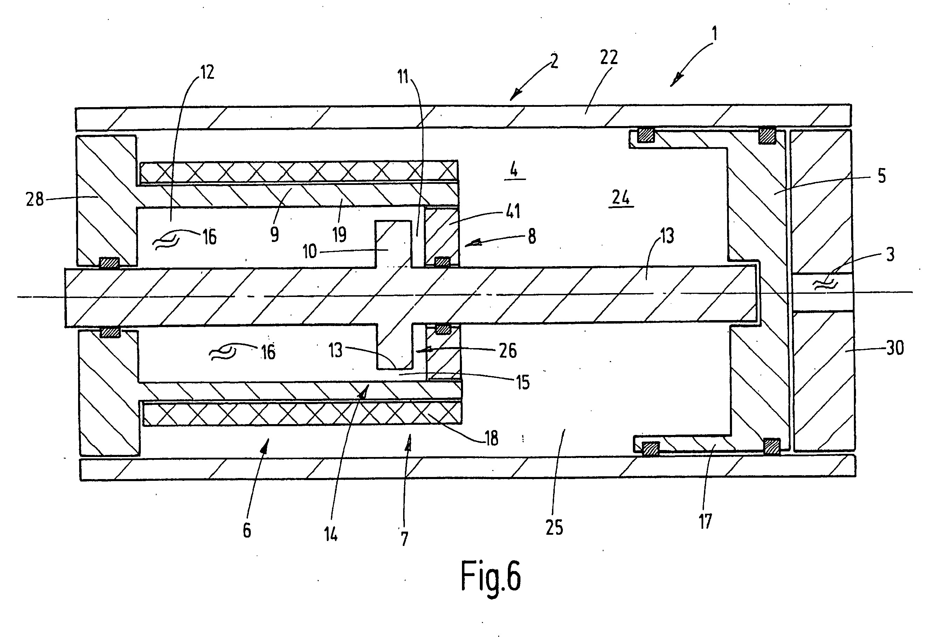

Die Fig.6 zeigt in einem weiteren schematischen Längsschnitt durch eine Vorrichtung 1 den Arbeitskolben 10 der Arretiereinrichtung 7 in einer fest mit dem Kolben 5 verbundenen Weise. Der Arbeitskolben 10 ist in der Art eines zylindrischen Stößels ausgebildet mit einer Erweiterung 26 an seinem Umfang, die radial unter Bildung des Spalts 15 bis an den Innenumfang des Zylindergehäuses 9 der Kolben-Zylinder-Anordnung 8 ragt. Das Zylindergehäuse 9 ist an dem Deckel 28, der dem Kolben 5 in der gezeigten Position abgewandt ist, festgelegt und von einem Zylinderdeckel 41 an seinem freien, in das Speichergehäuse 2 ragenden Ende begrenzt. Der Zylinderdekkel 41 ist von dem Arbeitskolben 10 dichtend durchragt. Um den gesamten Umfang des Zylindergehäuses 9 herum ist eine elektromagnetische Spule 18 mit radialem Spalt angeordnet, deren Magnetfeld das elektrorheologische Ventil 14 verschließt oder öffnet.

Der Kolben 5 ist auf seiner Kolbenrückseite mit einem Arbeitsgas 25 vorgespannt. Die in Fig.6 offenbarte Vorrichtung1 weist wenige bewegte Teile auf und kann demgemäß besonders kompakt aufbauen.

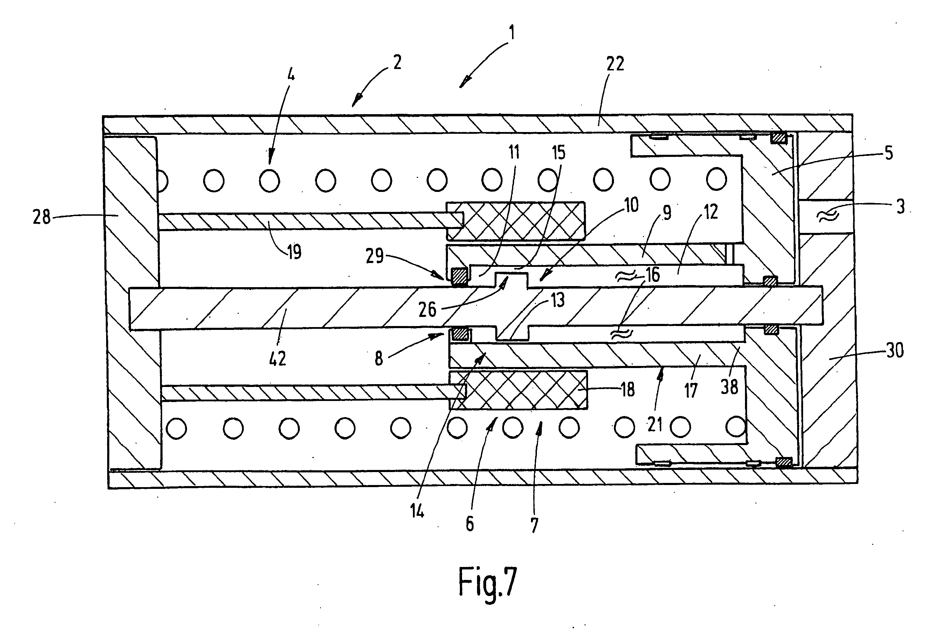

In der Fig.7 ist eine weitere Ausführungsvariante der Vorrichtung 1 in einem schematischen Längsschnitt gezeigt. Der Arbeitskolben 10 ist als Erweiterung 26 einer das Speichergehäuses 2 durchragenden, zylindrischen Traverse 42 angeordnet und insoweit lagefest. Die Traverse 42 durchragt auch den Kolben 5 und ist in dem Deckel 28,30 des Speichergehäuses axial mittig festgelegt. Der Schaft 17 des Kolbens 5 bildet das Zylindergehäuse 9 für die Kolben-Zylinder-Anordnung 8 aus und weist etwa den halben Außendurchmesser auf wie derjenige des Kolbens 5. An seinem, dem Kolben 5 abgewandten freien Ende weist das Zylindergehäuse 9 eine Dichteinrichtung 29 auf. Mit der Dichteinrichtung 29 in der Art einer Stopfbuchse oder Labyrinthdichtung ausgebildet gleitet das Zylindergehäuse 9 an der Traverse 42 entlang. Im Inneren des Zylindergehäuses 9 teilt die Erweiterung 26 die beiden Arbeitsräume 11,12 für das elektrorheologische Fluid 16 auf. Eine elektromagnetische Spule 18 ist an gehäusefesten Trägern 19, die parallel zu der Wand des Zylinders 22 des Speichergehäuses 2 in das Innere des Speichergehäuses 2 ragen, gehalten. Die Spule 18 ist im Axialbereich des elektrorheologischen Ventils 14 an der Außenseite 21 des Schafts mit radialem Abstand a gehalten.

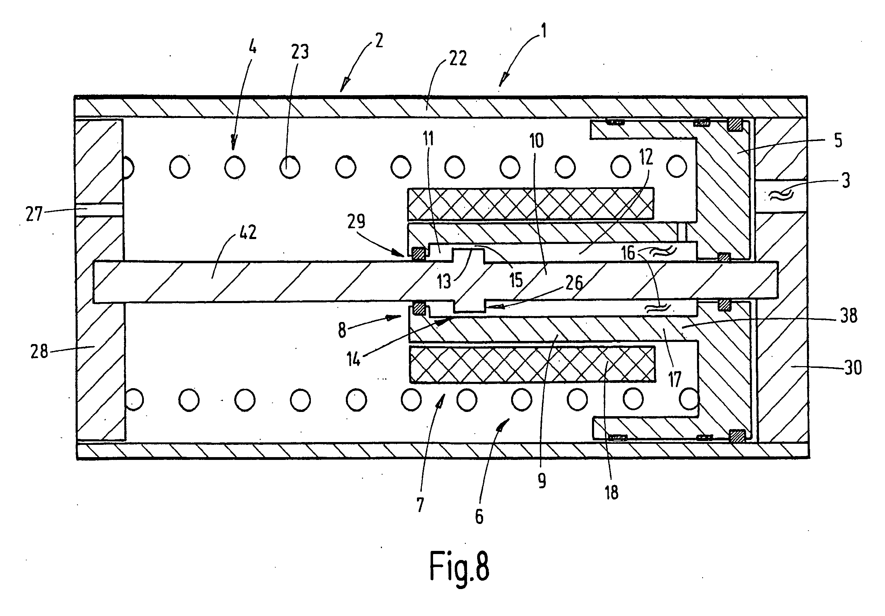

In der in Fig.7 gezeigten Position des Kolbens 5 ist die Spule 18 in unbestromtem Zustand und der Kolben 5 ist unter der Wirkung des als Schraubendruckfeder 23 gebildeten ersten Energiespeichers 4 in seine, einem Minimum der gespeicherten Fluidmenge 3 entsprechenden Position verfahren. Sofern die Spule 18 derart ausgebildet ist, dass sie über die gesamte Länge des Schafts 17 reicht, läßt sich diese auch an der Außenseite 20 des Schafts 17 festlegen und zusammen mit dem Kolben 5 verfahren (vgl. Fig.8). Dabei erübrigt sich die Anordnung von Trägern 19 für die Spule, wie dies das Ausführungsbeispiel in Fig.7 zeigt. Die Spule 18 ist mit einem flexiblen Versorgungskabel in dem Speichergehäuse mit Strom zu versorgen.

## Patentansprüche

1. Vorrichtung zum impulsartigen Freigeben einer in einem Speichergehäuse (2) bevorratbaren Fluidmenge (3), insbesondere zum Realisieren einer Start-Stopp-Funktion bei Automatikgetrieben, mit einem sich gegen einen ersten Energiespeicher (9) abstützenden Kolben (5), der innerhalb des Speichergehäuses (2) verfahrbar mit diesem die aufnehmbare Fluidmenge (3) begrenzt und der mittels einer Betätigungseinrichtung (6) angesteuert und von einer Arretiereinrichtung (7) freigegeben, die Fluidmenge (3) impulsartig aus dem Speichergehäuse (2) ausschiebt, wobei die Arretiereinrichtung (7) den Kolben (5) in seiner vorgespannten Lage hält und die von der Betätigungseinrichtung (6) betätigt in einer Lösestellung den Kolben (5) freigibt, **dadurch gekennzeichnet, dass** die Arretiereinrichtung (7) durch eine Kolben-Zylinder-Anordnung (8) mit einem Zylindergehäuse (9) gebildet ist, das von einem Arbeitskolben (10) in eine erste Arbeitskammer (11) und in eine zweite Arbeitskammer (12) unterteilt ist, dass am Umfang (13) des Arbeitskolbens (10) oder in dem Arbeitskolben (10) selbst ein elektrorheologisches oder magnetorheologisches Ventil (14) als Spalt (15) oder Öffnung zwischen den Arbeitskammern (11,12) angeordnet ist, der bzw. die mit einem, die Betätigungseinrichtung (6) bildenden variablen magnetischen oder elektrischen Feld beaufschlagt ist, und dass der Strömungswiderstand des in den Arbeitskammern (11,12) befindlichen elektrorheologischen oder magnetorheologischen Fluids (16) bis zu einer Blockade des Spalts (15) oder der Öffnung veränderbar ist.

2. Vorrichtung nach Anspruch 1, **dadurch gekennzeichnet, dass** der Arbeitskolben (10) fest mit dem Speichergehäuse (2) verbunden ist und dass als Zylindergehäuse (9) ein Schaft (17) des Kolbens (5) dient, der zentral angeordnet axial von dem Kolben (5) wegragt.

3. Vorrichtung nach Anspruch 1 oder 2, **dadurch gekennzeichnet, dass** die erste und die zweite Arbeitskammer (11,12) zwischen dem Schaft (17) und dem Speichergehäuse (2) angeordnet sind.

4. Vorrichtung nach Anspruch 1 oder 2, **dadurch gekennzeichnet, dass** die erste und die zweite Arbeitskammer (11,12) zwischen dem Schaft (17) und dem Arbeitskolben (10) angeordnet sind.

5. Vorrichtung nach einem der Ansprüche 1 bis 4, **dadurch gekennzeichnet, dass** eine elektromagnetische Spule (18) zur Erzeugung eines elektromagnetischen Feldes in dem Arbeitskolben (10) angeordnet ist.

6. Vorrichtung nach einem der Ansprüche 1 bis 4, **dadurch gekennzeichnet, dass** die elektromagnetische Spule (18) an einem in den Schaft (17) des Kolbens (5) ragenden oder verfahrbaren Träger (19) angeordnet ist.

7. Vorrichtung nach einem der Ansprüche 1 bis 4, **dadurch gekennzeichnet, dass** die elektromagnetische Spule (18) auf der Außenseite (20) des Speichergehäuses (2) angeordnet ist.

8. Vorrichtung nach einem der Ansprüche 1 bis 4, **dadurch gekennzeichnet, dass** die elektromagnetische Spule (18) mit radialem Abstand (a) an der Außenseite (21) des Schaftes (1 7) angeordnet ist.

9. Vorrichtung nach einem der Ansprüche 1 bis 8, **dadurch gekennzeichnet, dass** der Schaft (17) hohlzylindrisch ausgebildet ist und dass das Speichergehäuse (2) wenigstens bereichsweise als Zylinder (22) ausgebildet ist, in dem der Kolben (5) mit dem Schaft (17) zwischen einer ersten Endstellung und einer zweiten Endstellung längsverschiebbar angeordnet ist.

10. Vorrichtung nach einem der Ansprüche 1 bis 9, **dadurch gekennzeichnet, dass** der Schaft (17) einstückig mit dem Kolben (5) ausgebildet ist.

11. Vorrichtung nach einem der Ansprüche 2 bis 10, **dadurch gekennzeichnet, dass** der Schaft (17) in einer ein Maximum der Fluidmenge (3) des Speichergehäuses (2) definierenden Stellung in axialem Anschlag mit dem Speichergehäuse (2) ist.

12. Vorrichtung nach einem der Ansprüche 1 bis 11, **dadurch gekennzeichnet, dass** der erste Energiespeicher (24) als Druckfeder (23) oder Arbeitsraum (24) mit einem Arbeitsgas (25) ausgebildet ist.

## Claims

1. A device for the pulsed release of an amount of fluid (3) that can be stored in an accumulator housing (2), in particular for implementing a start-stop function in automatic transmissions, and that comprises a piston (5) that is supported on a first energy accumulator (9) and that, being displaceable within the accumulator housing (2), limits together with the latter the amount of fluid (3) that can be accommodated and that, when actuated by means of an actuating device (6) and released by a locking device (7), pushes the amount of fluid (3) out of the accumulator housing (2) in a pulsed manner, the locking device (7) holding the piston (5) in its pre-stressed position and that, when actuated by the actuating device (6), releases the piston (5) in a release position, **characterised in that** the locking device (7) is formed by a piston/cylinder arrangement (8) with a cylinder housing (9) that is subdivided into a first working chamber (11) and a second working chamber (12) by a working piston (10), that the circumference (13) of the working piston (10) or the interior of the working piston (10) itself has an electrorheological or magnetorheological valve (14) as a gap (15) or opening between the working chambers (11, 12), the gap or opening being charged with a variable magnetic or electric field forming the actuating device (6), and that the flow resistance of the electrorheological or magnetorheological fluid (16) located in the working chambers (11, 12) is variable up to a blockade of the gap (15) or the opening.

2. The device according to Claim 1, **characterised in that** the working piston (10) is securely connected to the accumulator housing (2) and that a shaft (17) of the piston (5) serves as the cylinder housing (9), and that said shaft, being centrally arranged, projects axially away from the piston (5).

3. The device according to Claim 1 or 2, **characterised in that** the first and the second working chambers (11, 12) are arranged between the shaft (17) and the accumulator housing (2).

4. The device according to Claim 1 or 2, **characterised in that** the first and the second working chambers (11, 12) are arranged between the shaft (17) and the working piston (10).

5. The device according to any of Claims 1 to 4, **characterised in that** an electromagnetic coil (18) for generating an electromagnetic field is disposed in the working piston (10).

6. The device according to any of Claims 1 to 4, **characterised in that** the electromagnetic coil (18) is disposed on a carrier (19) that can be moved or projects into the shaft (17) of the piston (5).

7. The device according to any of Claims 1 to 4, **characterised in that** the electromagnetic coil (18) is disposed on the outside (20) of the accumulator housing (2).

8. The device according to any of Claims 1 to 4, **characterised in that** the electromagnetic coil (18) is disposed on the outside (21) of the shaft (17) with radial spacing (a).

9. The device according to any of Claims 1 to 8, **characterised in that** the shaft (17) is designed as a hollow cylinder and that the accumulator housing (2) is designed as a cylinder (22), at least in certain areas, in which the piston (5) with the shaft (17) is arranged so as to be longitudinally displaceable between a first end position and a second end position.

10. The device according to any of Claims 1 to 9, **characterised in that** the shaft (17) is designed integrally with the piston (5).

11. The device according to any of Claims 2 to 10, **characterised in that** in a position defining a maximum of the fluid amount (3) of the accumulator housing (2), the shaft (17) is in axial abutment with the accumulator housing (2).

12. The device according to any of Claims 1 to 11, **characterised in that** the first energy accumulator (24) is in the form of a compression spring (23) or working space (24) with a working gas (25).

## Revendications

1. Dispositif de libération de manière pulsée d'un volume (3) de fluide pouvant être mis en réserve dans un carter (2) d'accumulateur, notamment pour la réalisation d'une fonction start-stop dans des transmissions automatiques, comprenant un piston (5), qui s'appuie sur un premier accumulateur (9) d'énergie, qui, en étant déplaçable à l'intérieur du carter (2) de l'accumulateur, délimite avec celui-ci le volume (3) de fluide pouvant être reçu et qui est commandé au moyen d'un dispositif (6) d'actionnement et, en étant libéré par un dispositif (7) d'arrêt, fait sortir le volume (3) de fluide de manière pulsée du carter (2) de l'accumulateur, le dispositif (7) d'arrêt maintenant le piston (5) dans sa position précontrainte et, actionné par le dispositif (6) d'actionnement, libèrant, dans une position de desserrage, le piston (5), **caractérisé en ce que** le dispositif (7) d'arrêt est formé par un agencement (8) piston-cylindre ayant une enveloppe (9) de cylindre, qui est subdivisée par un piston (10) de travail en une première chambre (11) de travail et en une deuxième chambre (12) de travail, **en ce que**, sur le pourtour (13) du piston (10) de travail ou dans le piston (10) de travail soi-même, est montée, comme fente (15) ou ouverture, entre les chambres (11, 12) de travail, une vanne (14) électrorhéologique ou magnétorhéologique, qui est soummise à un champ magnétique ou électrique variable formant le dispositif (6) d'actionnement et **en ce que** la résistance à l'écoulement du fluide (16) électrorhéologique ou magnétorhérologique se trouvant dans les chambres (11, 12) de travail peut être modifiée jusqu'à un blocage de la fente (15) ou de l'ouverture.

2. Dispositif suivant la revendication 1, **caractérisé en ce que** le piston (10) de travail est relié fixement au carter (2) de l'accumulateur et **en ce qu'**une tige (17) du piston (5), qui disposée centralement, s'éloigne axialement du piston (5), sert d'enveloppe (9) du cylindre.

3. Dispositif suivant la revendication 1 ou 2, **caractérisé en ce que** la première et la deuxième chambres (11, 12) de travail sont disposées entre la tige (17) et le carter (2) de l'accumulateur.

4. Dispositif suivant la revendication 1 ou 2, **caractérisé en ce que** la première et la deuxième chambres (11, 12) de travail sont disposées entre la tige (17) et le piston (10) de travail.

5. Dispositif suivant l'une des revendications 1 à 4, **caractérisé en ce qu'**une bobine (18) électromagnétique est, pour la production d'un champ électromagnétique, disposée dans le piston (10) de travail.

6. Dispositif suivant l'une des revendications 1 à 4, **caractérisé en ce que** la bobine (18) électromagnétique est mise sur un support (19) pénétrant ou déplaçable dans la tige (17) du piston (5).

7. Dispositif suivant l'une des revendications 1 à 4, **caractérisé en ce que** la bobine (18) électromagnétique est disposée du côté (20) extérieur du carter (2) de l'accumulateur.

8. Dispositif suivant l'une des revendications 1 à 4, **caractérisé en ce que** la bobine (18) électromagnétique est disposée à distance (a) radiale du côté (21) extérieur de la tige (17).

9. Dispositif suivant l'une des revendications 1 à 8, **caractérisé en ce que** la tige (17) est constituée sous la forme d'un cylindre creux et **en ce que** le carter (2) de l'accumulateur est constitué, au moins par endroit, sous la forme d'un cylindre (22), dans lequel le piston (5) ayant la tige (17) est monté coulissant longitudinalement entre une première position d'extrémité et une deuxième position d'extrémité.

10. Dispositif suivant l'une des revendications 1 à 9, **caractérisé en ce que** la tige (17) est constituée d'une seule pièce avec le piston (5).

11. Dispositif suivant l'une des revendications 2 à 10, **caractérisé en ce que** la tige (17) est, dans une position définissant un maximum du volume (3) du fluide du carter (2) de l'accumulateur, en butée axiale avec le carter (2) de l'accumulateur.

12. Dispositif suivant l'une des revendications 1 à 11, **caractérisé en ce que** le premier accumulateur (24) d'énergie est constitué sous la forme d'un ressort (23) de compression ou d'une chambre (24) de travail ayant un gaz (25) de travail.
